# EUROPÄISCHE PATENTSCHRIFT

(11) **EP 1 370 779 B1**
(45) Veröffentlichungstag und Bekanntmachung des Hinweises auf die Patenterteilung: **18.08.2004**
(21) Anmeldenummer: 02729811.6
(22) Anmeldetag: 21.03.2002
(51) Int. Cl.: F16C 11/06

(54) **KUGELGELENK**
BALL-AND-SOCKET JOINT
ARTICULATION A ROTULE

(30) Priorität: 23.03.2001 DE 10114693
(43) Veröffentlichungstag der Anmeldung: 17.12.2003
(73) Patentinhaber: ZF Lemförder Metallwaren AG, 49441 Lemförde (DE)
(72) Erfinder: ABELS, Olaf, 49191 Belm (DE); GRÖGER, Dieter, 49401 Damme (DE)
(86) Internationale Anmeldenummer: PCT/DE2002/001027
(87) Internationale Veröffentlichungsnummer: WO 2002/077470

(56) Entgegenhaltungen:
- WO-A-00/55514
- DE-B- 1 266 074
- DE-C- 19 843 063
- US-A- 5 312 200
- PATENT ABSTRACTS OF JAPAN vol. 010, no. 010 (M-446), 16. Januar 1986 (1986-01-16) & JP 60 172778 A (TOYODA GOSEI KK), 6. September 1985 (1985-09-06)

## Beschreibung

Die Erfindung betrifft ein Kugelgelenk mit einem Gehäuse, einem in dem Gehäuse schwenkbar gelagerten Kugelzapfen und einem am Gehäuse befestigten und am Kugelzapfen über einen zwei Schenkel aufweisenden Dichtungsring gleitfähig gelagerten Dichtungsbalg, wobei ein erster der beiden Schenkel unter Spannung am Kugelzapfen anliegt und der zweite Schenkel in die Wandung des Dichtungsbalgs eingreift.

Ein derartiges Kugelgelenk wird in der DE 198 43 063 Cl offenbart wobei an der Innenseite des Dichtungsbalgs eine umlaufende Nut vorgesehen ist, in die der zweite Schenkel des Dichtungsrings eingreift. Bei diesem Kugelgelenk kann es aufgrund von Haftungsproblemen zwischen dem Dichtungsring und dem Dichtungsbalg zu einer Lockerung des Sitzes des Dichtungsrings kommen, was zu Undichtigkeiten führen kann. Auch ist die Verankerung des Kunststoffmaterials im Balgmaterial aufwendig. Ferner kann das zu erwartende Kriechen des Kunststoffes zu vorspannungsbedingten Undichtigkeiten fuhren.

Aufgabe der Erfindung ist es, den Sitz des Dichtungsrings in dem Dichtungsbalg zu verbessern.

Diese Aufgabe wird erfindungsgemäß durch ein Kugelgelenk mit den Merkmalen nach dem Patentanspruch 1 gelöst.

Das erfindungsgemäße Kugelgelenk weist ein Gehäuse, einen in dem Gehäuse schwenkbar gelagerten Kugelzapfen und einen am Gehäuse befestigten und am Kugelzapfen über einen zwei Schenkel aufweisenden Dichtungsring gleitfähig gelagerten Dichtungsbalg auf, wobei ein erster Schenkel der beiden Schenkel unter Spannung am Kugelzapfen anliegt und der zweite Schenkel in die Wandung des Dichtungsbalgs eingreift. Der zweite Schenkel ist dabei in einem zumindest teilweise in der Wandung des Dichtungsbalgs angeordneten Verankerungsring befestigt.

Bei dem erfindungsgemäßen Kugelgelenk ist der Dichtungsring in einem zumindest teilweise in der Wandung des Dichtungsbalgs angeordneten Verankerungsring befestigt, der eine separate Halterung für den Dichtungsring bildet. Dadurch ist der Sitz des Dichtungsrings erheblich verbessert. Auch dient der Verankerungsring einer Versteifung des Dichtungsbalgs im Dichtbereich, was zu einer gleichmäßigeren Verteilung der Spannungen im Dichtungsring z.B. bei einer Verwindung oder Verdrehung des Balges führt.

Der Dichtungsring kann allein aufgrund seiner Eigenspannung mit seinem ersten Schenkel an dem Kugelzapfen dichtend anliegen. Bevorzugt weist der Dichtungsbalg aber einen an dem ersten Schenkel anliegenden und diesen gegen den Kugelzapfen drückenden Andrückbereich auf. Dadurch wird eine von der Eigenspannung des Dichtungsrings unabhängige radiale Vorspannung auf den ersten Schenkel des Dichtungsring aufgebracht, so dass ein mögliches Kriechen des Dichtungsringmaterials ausgeglichen und die Dichtigkeit verbessert werden kann.

Die beiden Schenkel des Dichtungsrings können zum Beispiel einen spitzen Winkel miteinander einschließen. Dabei besteht allerdings die Gefahr, dass sich das von dem ersten Schenkel abgewandte Ende des zweiten Schenkels vom Kugelzapfen abhebt, wodurch Schmutz zwischen den Dichtungsring und den Kugelzapfen gelangen kann.

Bevorzugt schließen die beiden Schenkel daher einen rechten oder einen stumpfen Winkel miteinander ein.

Der Dichtungsring kann mit dem Verankerungsring verklebt oder an diesem (z.B. durch Kunststoffschweißen) angeschweißt sein. Auch können der Dichtungsring und der Verankerungsring reibschlüssig miteinander verbunden sein. Bevorzugt ist der zweite Schenkel des Dichtungsrings aber formschlüssig in dem Verankerungsring befestigt.

Die formschlüssige Verbindung zwischen dem Dichtungsring und dem Verankerungsring kann dadurch erfolgen, dass an dem zweiten Schenkel Vorsprünge vorgesehen sind, die in den Verankerungsring eingreifen. Bevorzugt sind aber in dem zweiten Schenkel Ausnehmungen ausgebildet, in die der Verankerungsring eingreift.

Der Dichtungsring kann aus einem beliebigen Material gefertigt sein, welches die Abdichtung zwischen Dichtungsring und Kugelzapfen auch bei dynamischen Belastungen über einen langen Zeitraum gewährleistet. Hierfür ist der Dichtungsring bevorzugt aus Kunststoff, insbesondere aus einem mit Kohle versetzten PTFE-Werkstoff (kohlegefüllten 'PTFE-compound') hergestellt.

Der Verankerungsring kann im Querschnitt z.B. ein viereckiges Profil aufweisen. Bevorzugt weist der Verankerungsring im Querschnitt aber zumindest bereichsweise ein L-Profil auf, wodurch die Versteifung des Dichtungsbalgs im Dichtungsbereich noch verbessert wird.

Der Verankerungsring kann in einer in dem Dichtungsbalg vorgesehenen Ausnehmung angeordnet sein. Bevorzugt ist der Dichtungsbalg aber aus einem spritzfahigen Elastomer-Werkstoff, insbesondere aus Gummi hergestellt, wobei der Verankerungsring von dem Elastomer-Werkstoff zumindest teilweise umspritzt ist. Dadurch ist der Aufwand für die Montage des Dichtungsrings zusammen mit dem Verankerungsring an dem Dichtungsbalg in erheblicher Weise reduziert, da der Dichtungsring nicht mehr z.B. von Hand in eine Nut des Dichtungsbalgs eingesetzt werden muss.

Der Verankerungsring kann unmittelbar von dem Elastomer-Werkstoff umspritzt werden. Bevorzugt ist aber der Verankerungsring mit einem haftenden Zusatzstoff beschichtet, der mit dem Elastomer-Werkstoff eine stoffschlüssige Verbindung eingeht, wodurch die Verbindung zwischen dem Verankerungsring und dem Dichtungsbalg verbessert ist.

Der Verankerungsring kann aus einem beliebigen Material hergestellt sein, das geeignet ist, den Sitz des Dichtungsrings in dem Dichtungsbalg zu verbessern. Bevorzugt ist der Verankerungsring aber aus Kunststoff, insbesondere aus einem glasfaserverstärkten Polyamid-Werkstoff (wie z.B. 'PA 6.6 + GF') hergestellt.

Die Erfindung wird nachfolgend anhand einer bevorzugten Ausfuhrungsform unter Bezugnahme auf die Zeichnung beschrieben. In der Zeichnung zeigen:
- Figur 1: eine teilweise Schnittansicht einer Ausführungsform des erfindungsgemäßen Kugelgelenks,
- Figur 2: einen Dichtungsring gemäß der Ausführungsform nach Figur 1 im unmontierten Zustand,
- Figur 3: einen Verankerungsring gemäß der Ausführungsform nach Figur 1, wobei der Dichtungsring nach Figur 2 bereits in den Verankerungsring integriert ist
und
- Figur 4: eine teilweise geschnittene Ansicht des in dem Dichtungsbalg angeordneten Verankerungsrings nach Figur 3.

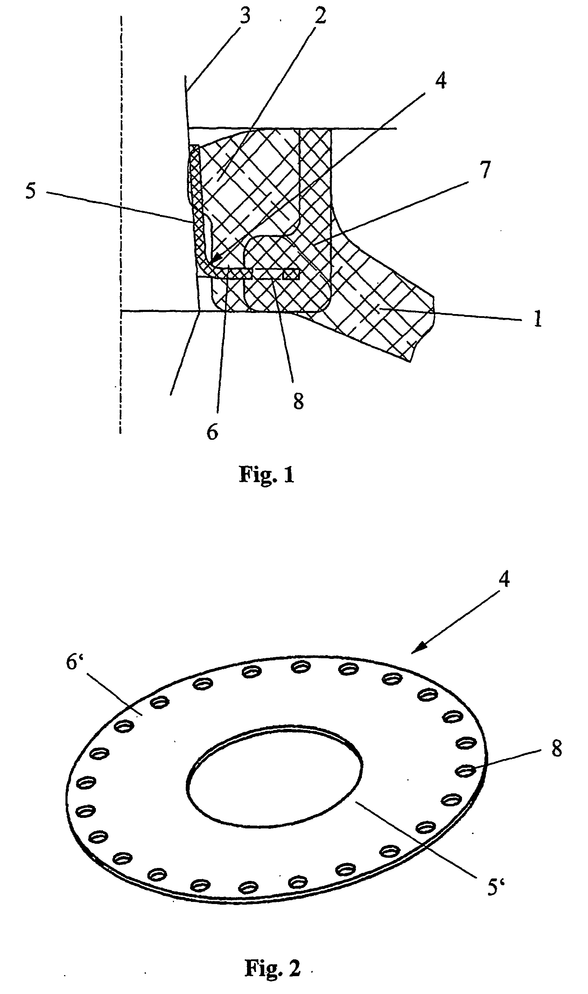

Aus Figur 1 ist eine teilweise Schnittansicht einer Ausführungsform des erfindungsgemäßen Gugelgelenks ersichtlich, wonach ein Dichtungsbalg 1 mit seinem oberen, einen Andrückbereich 2 aufweisenden Ende an einem Kugelzapfen 3 gelagert ist. Der Dichtungsbalg 1 ist über einen zwei Schenkel aufweisenden Dichtungsring 4 an dem Kugelzapfen 3 gleitfähig gelagert, wobei ein erster der beiden Schenkel 5 unter Spannung am Kugelzapfen 3 anliegt und der zweite Schenkel 6 in die Wandung des Dichtungsbalgs 1 eingreift. Die Spannung, mit welcher der erste Schenkel 5 an dem Kugelzapfen anliegt, wird zum einen von der Eigenspannung des Dichtungsrings 4 und zum anderen über den Andrückbereich 2 bestimmt, der den ersten Schenkel 5 zusätzlich zur Eigenspannung gegen den Kugelzapfen 3 drückt.

In der Wandung des Dichtungsbalgs 1 ist ein Verankerungsring 7 befestigt, der von dem Elastomer-Werkstoff des Dichtungsbalges 1 teilweise umspritzt ist Der zweite Schenkel 6 des Dichtungsrings 4 ist formschlüssig in dem Verankerungsring 7 befestigt, wobei in dem zweiten Schenkel 6 des Dichtungsrings 4 vorgesehene Ausnehmungen in Form von Löchern 8 von dem Material des Verankerungsrings 7 durchsetzt sind.

Aus Figur 2 ist eine perspektivische Ansicht des Dichtungsrings 4 nach Figur 1 im unmontierten Zustand ersichtlich, wobei der dem ersten Schenkel 5 zugeordnete (radial innen liegende) Bereich des Dichtungsrings 4 mit dem Bezugszeichen 5' und der dem zweiten Schenkel 6 zugeordnete (radial außen liegende) Bereich des Dichtungsrings 4 mit dem Bezugszeichen 6' bezeichnet ist. Die beiden Bereiche 5' und 6' liegen im unmontierten Zustand des Dichtungsringes 4 in einer Ebene, wobei in dem radial außen liegenden Bereich 6' die Löcher 8 in Form eines Lochkranzes ausgebildet sind.

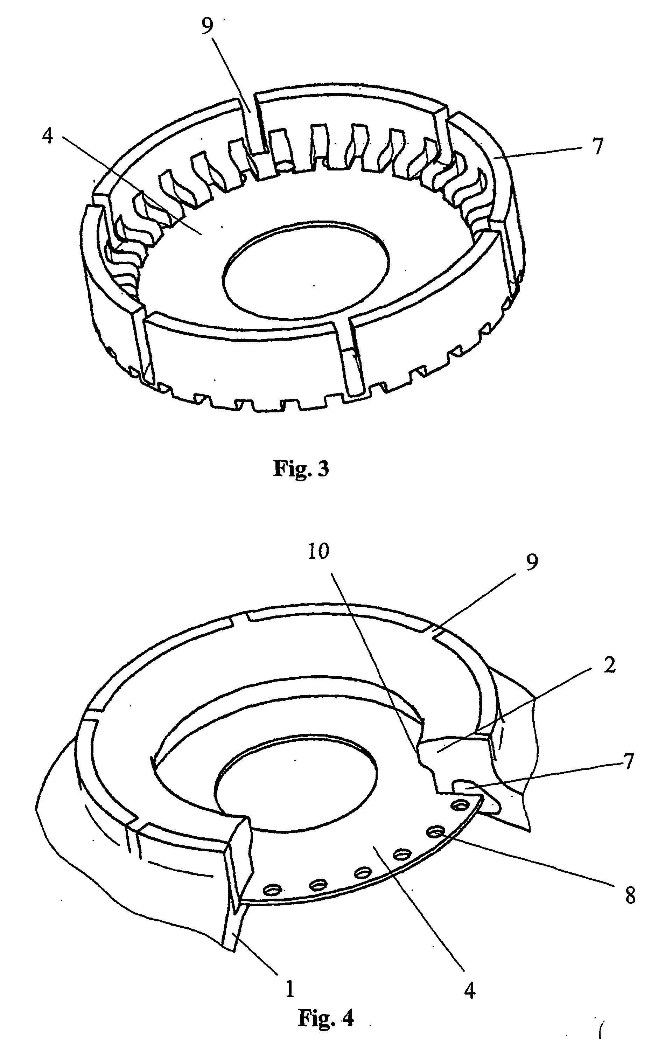

Aus Figur 3 ist der Verankerungsring 7 ersichtlich, der durch teilweises Umspritzen des Dichtungsrings 4 aus dem Material PA 6.6 + GF oder aus einem Kunststoff mit vergleichbaren Eigenschaften hergestellt ist. Während des Umspritzvorganges fließt des Material des Verankerungsrings in die Löcher 8 des Dichtungsrings 4, so dass nach dem Aushärten oder Abkühlen des Materials ein fester und gegenüber dem Verankerungsring 7 verdrehsicherer Sitz des Dichtungsrings 4 in dem Verankerungsring 7 aufgrund eines Formschlusses zwischen dem Dichtungsring 4 und dem Verankerungsring 7 ausgebildet ist. Der Verankerungsring 7 weist dabei in seinem Querschnitt bereichsweise ein L-Profil auf und ist entlang seines Umfangs mit mehreren Schlitzen 9 versehen.

Wie aus Figur 4 ersichtlich, ist der Verankerungsring 7 in der Wandung des Dichtungsbalgs 1 angeordnet Während des Umspritzens des Verankerungsrings 7 mit dem Elastomer-Werkstoff des Dichtungsbalgs 1 werden die Schlitze 9 mit Elastomer-Material gefüllt, so dass der Verankerungsring 7 über einen Formschluss verdrehsicher in der Wandung des Dichtungsbalgs 1 sitzt. Ferner weist der Andrückbereich 2 einen Vorsprung 10 auf, der im montierten Zustand an dem ersten Schenkel 5 anliegt.

Während der Montage des Kugelgelenks wird der Dichtungsbalg 1 über den Kugelzapfen 3 gestülpt. Da im unmontierten Zustand der Innendurchmesser des Dichtungsrings 4 geringer als der Außendurchmesser des Kugelzapfens 3 ist, wird der Bereich 5' des Dichtungsrings 4 während des Überstülpens aufgeweitet und gegenüber dem Bereich 6' umgebogen, so dass der radial innenliegende Bereich 5' des Dichtungsrings 4 nach der Montage den unter Vorspannung an dem Kugelzapfen 3 anliegenden ersten Schenkel 5 bildet Durch die Montage werden somit aus den beiden Bereichen 5' und 6' die beiden unter einer Eigenspannung stehenden Schenkel 5 bzw. 6. des Dichtungsringes 4, wobei der erste Schenkel 5 ferner von dem Vorsprung 10 des Andrückbereichs 2 gegen den Kugelzapfen gedrückt wird.

### Bezugszeichenliste:

- 1: Dichtungsbalg
- 2: Andrückbereich
- 3: Kugelzapfen
- 4: Dichtungsring
- 5: erster Schenkel des Dichtungsrings
- 5': radial innen liegender Bereich
- 6: zweiter Schenkel des Dichtungsrings
- 6': radial außen liegender Bereich
- 7: Verankerungsring
- 8: Löcher
- 9: Schlitze
- 10: Vorsprung des Andrückbereichs

## Patentansprüche

1. Kugelgelenk mit einem Gehäuse, einem in dem Gehäuse schwenkbar gelagerten Kugelzapfen (3) und einem am Gehäuse befestigten und am Kugelzapfen (3) über einen zwei Schenkel (5, 6) aufweisenden Dichtungsring (4) gleitfähig gelagerten Dichtungsbalg (1), wobei ein erster der beiden Schenkel (5) unter Spannung am Kugelzapfen (3) anliegt und der zweite Schenkel (6) in die Wandung des Dichtungsbalgs (1) eingreift,
**dadurch gekennzeichnet, dass** der zweite Schenkel (6) in einem zumindest teilweise in der Wandung des Dichtungsbalgs (1) angeordneten Verankerungsring (7) befestigt ist

2. Kugelgelenk nach Anspruch 1, **dadurch gekennzeichnet, dass** der Dichtungsbalg (1) einen an dem ersten Schenkel (5) anliegenden und diesen gegen den Kugelzapfen (3) drückenden Andrückbereich (2) aufweist.

3. Kugelgelenk nach Anspruch 1 oder 2, **dadurch gekennzeichnet, dass** die beiden Schenkel (5, 6) einen rechten oder einen stumpfen Winkel miteinander einschließen.

4. Kugelgelenk nach einem der Ansprüche 1 bis 3, **dadurch gekennzeichnet, dass** der zweite Schenkel (6) formschlüssig in dem Verankerungsring (7) befestigt ist

5. Kugelgelenk nach Anspruch 4, **dadurch gekennzeichnet, dass** in dem zweiten Schenkel (6) Ausnehmungen (8) vorgesehen sind, in welche der Verankerungsring (7) eingreift.

6. Kugelgelenk nach einem der Ansprüche 1 bis 5, **dadurch gekennzeichnet, dass** der Dichtungsring (4) aus Kunststoff, insbesondere aus einem mit Kohle versetzten PTFE-WerkstofFhergestellt ist.

7. Kugelgelenk nach einem der Ansprüche 1 bis 6, **dadurch gekennzeichnet, dass** der Verankerungsring (7) im Querschnitt ein L-Profil aufweist.

8. Kugelgelenk nach einem der Ansprüche 1 bis 7, **dadurch gekennzeichnet, dass** der Dichtungsbalg (1) aus einem spritzfahigen Elastomer - Werkstoff, insbesondere aus Gummi hergestellt ist und der Verankerungsring (7) von dem Elastomer - Werkstoff zumindest teilweise umspritzt ist.

9. Kugelgelenk nach einem der Ansprüche 1 bis 8, **dadurch gekennzeichnet, dass** die Oberfläche des Verankerungsrings (7) mit einem an dem Dichtungsbalg (1) haftenden Zusatzstoff beschichtet ist.

10. Kugelgelenk nach einem der Ansprüche 1 bis 9, **dadurch gekennzeichnet, dass** der Verankerungsring (7) aus Kunststoff, insbesondere aus einem glasfaserverstärkten Polyamid-Werkstoff hergestellt ist.

## Claims

1. A ball joint having a housing, a ball journal (3) mounted swivellably in the housing and a sealing bellows (1) attached to the housing and mounted slidably on the ball journal (3) via a sealing ring (4) comprising two limbs (5, 6), wherein a first one of the two limbs (5) rests under tension against the ball journal (3) and the second limb (6) engages in the wall of the sealing bellows (1), **characterised in that** the second limb (6) is attached in an anchoring ring (7) arranged at least partially in the wall of the sealing bellows (1).

2. A ball joint according to claim 1, **characterised in that** the sealing bellows (1) comprises a pressure area (2) resting on the first limb (5) and pressing it against the ball journal (3).

3. A ball joint according to claim 1 or claim 2, **characterised in that** the two limbs (5, 6) form a right or an obtuse angle with one another.

4. A ball joint according to one of claims 1 to 3, **characterised in that** the second limb (6) is attached form-fittingly in the anchoring ring (7).

5. A ball joint according to claim 4, **characterised in that** in the second limb (6) there are provided recesses (8) in which the anchoring ring (7) engages.

6. A ball joint according to one of claims 1 to 5, **characterised in that** the sealing ring (4) is made of plastics, especially of a PTFE material combined with carbon.

7. A ball joint according to one of claims 1 to 6, **characterised in that** the anchoring ring (7) exhibits an L-shaped profile in cross section.

8. A ball joint according to one of claims 1 to 7, **characterised in that** the sealing bellows (1) is made of an injection-mouldable elastomeric material, in particular of rubber, and the anchoring ring (7) is encapsulated at least in part by injection moulding with the elastomeric material.

9. A ball joint according to one of claims 1 to 8, **characterised in that** the surface of the anchoring ring (7) is coated with an additive adhering to the sealing bellows (1).

10. A ball joint according to one of claims 1 to 9, **characterised in that** the anchoring ring (7) is made of plastics, in particular of a glass fibre-reinforced polyamide material.

## Revendications

1. Joint sphérique avec un boîtier, un pivot sphérique (3) monté pivotant dans le boîtier et un soufflet d'étanchéité (1) fixé au boîtier et monté de manière à pouvoir glisser sur le pivot sphérique (3), par une bague d'étanchéité (4) comportant deux branches (5, 6), une première des deux branches (5) s'appliquant avec contrainte contre le pivot sphérique (3) et la deuxième branche (6) s'engageant dans la paroi du soufflet d'étanchéité (1), **caractérisé en ce que** la deuxième branche (6) est fixée dans une bague d'ancrage (7) disposée au moins en partie dans la paroi du soufflet d'étanchéité (1).

2. Joint sphérique selon la revendication 1, **caractérisé en ce que** le soufflet d'étanchéité (1) présente une zone de pression (2) s'appliquant contre la première branche (5) et pressant celle-ci contre le pivot sphérique (3).

3. Joint sphérique selon la revendication 1 ou 2, **caractérisé en ce que** les deux branches (5, 6) forment entre elles un angle droit ou un angle obtus.

4. Joint sphérique selon l'une des revendications 1 à 3, **caractérisé en ce que** la deuxième branche (6) est fixée par complémentarité de forme dans la bague d'ancrage (7).

5. Joint sphérique selon la revendication 4, **caractérisé en ce que** dans la deuxième branche (6) sont prévus des évidements (8) dans lesquels s'engage la bague d'ancrage (7).

6. Joint sphérique selon l'une des revendications 1 à 5, **caractérisé en ce que** la bague d'étanchéité (4) est fabriquée en matière plastique en particulier en un matériau de PTFE additionné de carbone.

7. Joint sphérique selon l'une des revendications 1 à 6, **caractérisé en ce que** la bague d'ancrage (7) présente une section transversale profilée en L.

8. Joint sphérique selon l'une des revendications 1 à 7, **caractérisé en ce que** la bague d'étanchéité (1) est réalisée dans un matériau d'élastomère injectable, en particulier en caoutchouc, et la bague d'ancrage (7) est au moins en partie enrobée par injection par le matériau d'élastomère.

9. Joint sphérique selon l'une des revendications 1 à 8, **caractérisé en ce que** la surface de la bague d'ancrage (7) est recouverte d'un adjuvant adhérant au soufflet d'étanchéité (1).

10. Joint sphérique selon l'une des revendications 1 à 9, **caractérisé en ce que** la bague d'ancrage (7) est réalisée en matière plastique, en particulier en un matériau de polyamide renforcé par des fibres de verre.
